# EUROPÄISCHE PATENTSCHRIFT

(11) **EP 0 982 431 B1**
(45) Veröffentlichungstag und Bekanntmachung des Hinweises auf die Patenterteilung: **29.11.2006**
(21) Anmeldenummer: 99116086.2
(22) Anmeldetag: 17.08.1999
(51) Int. Cl.: D06N 3/04, B32B 27/12, B32B 27/32, B32B 37/15

(54) **Extrusionsbeschichtete Vliesbahnen**
Extrusion coated nonwoven web
Non-tissé enduit par extrusion

(30) Priorität: 25.08.1998 DE 19838507
(43) Veröffentlichungstag der Anmeldung: 01.03.2000
(73) Patentinhaber: Borealis Polyolefine GmbH, 2320 Schwechat-Mannswörth (AT)
(72) Erfinder: Kirchberger, Manfred Ing., 4731 Prambachkirchen (AT); Wolfsberger, Anton Ing., 4210 Engerwitzdorf (AT); Paulik, Christian, Dr., 4030 Linz (AT)
(74) Vertreter: Grünecker, Kinkeldey, Stockmair & Schwanhäusser Anwaltssozietät

(56) Entgegenhaltungen:
- WO-A-97/29909
- WO-A-99/19142
- DATABASE WPI Section Ch, Week 199051 Derwent Publications Ltd., London, GB; Class A18, AN 1990-380840 XP002242239 & JP 02 276636 A (SUMITOMO CHEM IND KK), 13. November 1990 (1990-11-13)

## Beschreibung

Die Erfindung betrifft einseitig mit Polyolefinen extrusionsbeschichtete Vliesbahnen aus Polyethylen, Polypropylen, Polyethylenterephthalat oder Polyamid mit textilem Charakter, die für einen Einsatz im Hygienebereich, im Bereich Medizin, in der Textil- und Bekleidungsindustrie, in der Automobilindustrie sowie im Bauwesen geeignet sind.

Die Herstellung von Vliesbahnen in Form von Kunststoffvliesen nach der Stapelfasertechnologie, Spinnvliestechnologie und Blasfasertechnologie ("Melt-Blow") [Fourne, F., Chemiefasern/Textilindustrie 81(1979), 445-449; 95(1993), 811-822; DE 195 21 466; DE 19 620 379] sowie die Nachverstreckung von Kunststoffvliesen (DE 195 01 123; DE 195 01 125) sind bekannt.

Übliche Verfahren zur Aufbringung von Beschichtungen auf Kunststoffvliese sind die Kaschierung, Thermobondierung, das Ultraschallverschweißen und die Extrusionsbeschichtung.

Bekannte Beispiele für beschichtete Kunststoffvliese, die durch Aufkaschierung von Kunststoffolien auf Kunststoffvliese hergestellt wurden, sind Polyethylen-beschichtete Polypropylenvliese (FR 2 729 328), PVC-beschichtete Polyestervliese (US 4 591 526) und Polypropylen-beschichtete Vliesmaterialien (US 5 169 712).

Bekannte Beispiele für beschichtete Kunststoffvliese, die durch Thermobondierung hergestellt wurden, sind Polyethylen-beschichtete Polypropylenvliese (DE 3 515 580) und Polypropylen-beschichtete Kunststoffvliese (WO 95/11803; DE 19 534 704; DE 19 534 702).

Bekannte Beispiele für beschichtete Kunststoffvliese, die durch Ultraschallverschweißung von Folien mit Vliesen hergestellt wurden, sind Polyethylen-beschichtete Polyethylenvliese (EP 0 325 543) und Folienbeschichtungen aus Polypropylen und textilen Flächengebilden (EP 0 505 027).

Bekannte Beispiele für extrusionsbeschichtete Kunststoffvliese sind Acrylat-beschichtete Polyethylenterephthalatvliese (FR 2 662 603), Polyethylen-beschichtete Polypropylenvliese (SU 1 514 653; EP 0 474 123) und EVA-beschichtete Polyethylenvliese (EP 0 291 598).

Bekannte Haftvermittler für Haftvermittlerzwischenschichten zur Verbesserung der Haftung der Polyolefinbeschichtung auf dem textilen Flächengebilde sind Säure- bzw. Säureanhydrid- gepfropfte Polypropylene, Ethylen-(Meth)Acrylat-Copolymere, EVA-Copolymere, Polyisocyanate oder Polyurethane (JP 52094383; JP 60250938).

Bekannt ist schließlich ebenfalls die Herstellung von Folien mit hoher Porosität durch Verstreckung von Polyolefinfolien, die hohe Füllstoffanteile enthalten (EP 0 352 802; EP 0 779 325).

JP 02 276 636 A und WO 97 299 909 beschreiben ganz allgemein die Verstreckung von extrusions beschichteten Polyolefinvliesen, wobei in WO 97 299 909 die Verstreckung taktweise und mittels spezieller Streckrollen erfolgt.

Der Nachteil der bekannten Lösungen für Vliesbahnen mit poröser Polyolefinbeschichtung besteht darin, daß sich nach den bekannten Technologien keine Vliesbahnen mit dünnen Polyolefnbeschichtungen herstellen tassen, die die Anforderungen an Beschichtungsdicke, Porenzahl und Porengrößenverteilung erfüllen

Die Aufgabe der vorliegenden Erfindung bestand in der Entwicklung von Vliesbahnen mit einer dünnen Polyolefinbeschichtung, die eine hohe Porenzahl bei sehr geringen Porendurchmessern besitzen und für einen Einsatz im Hygienebereich, im Bereich Medizin, in der Textil- und Bekleidungsindustrie, in der Automobilindustrie sowie im Bauwesen geeignet sind.

Die erfindungsgemäße Aufgabe wurde durch einseitig mit Polyolefinen extrusionsbeschichtete Vliesbahnen mit textilem Charakter, einer Zugfestigkeit von 4 bis 20 MPa in Längsrichtung und 2 bis 15 MPa in Querrichtung und einem gesamten Flächengewicht von 10 bis 100 g/m² gelöst,
wobei die Extrusionsbeschichtungen aus Polyolefinen ein Flächengewicht von 5 bis 70 g/m², bevorzugt 6 bis 40 g/m², eine Weißbruchtrübung von 0,1 bis 5%, bevorzugt von 0,1 bis 2%, eine Porenflächenverteilung, bei der mindestens 90% aller Poren im Bereich von 0,03 bis 0,20 µm² liegen und die maximale Porenfläche kleiner als 1 µm ist, besitzen,
und wobei die Vliesbahnen aus Polyethylen und/oder Polypropylen und/oder Polyethylenterephthalat und/oder Polyamid bestehen und ein Flächengewicht von 5 bis 100 g/m², bevorzugt 10 bis 40 g/m², besitzen,
wobei die Extrusionsbeschichtungen aus Polyolefinen erfindungsgemäß aus
a) Propylenhomopolymeren bzw. Copolymeren aus 70 bis 99 Masse% Propylen und 30 bis 1 Masse% Ethylen und/oder α-Olefinen mit 4 bis 18 C-Atomen,
b) 1 bis 50 Masse%, vorzugsweise 5 bis 30 Masse%, bezogen auf die Propylenpolymere a), modifizierten Propylenpolymeren mit Schmelzindices von 0,1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95,
c) 10 bis 60 Masse%, bezogen auf die Summe der Polyolefine, an organischen und/oder anorganischen Füllstoffen mit einem Partikeldurchmesser, gemessen über die längste Ausdehnung der Partikel, von 0,1 bis 10 µm, bevorzugt 0,5 bis 5 µm, und
d) 0,01 bis 2,5 Masse% Stabilisatoren, 0,01 bis 1 Masse% Verarbeitungshilfsmitteln, jeweils bezogen auf die Summe der Polyolefine, und gegebenenfalls 0,1 bis 1 Masse% Antistatika und/oder 0,05 bis 1 Masse% Nukleierungsmitteln, jeweils bezogen auf die Summe der Polyolefine, als Hilfsstoffe
bestehen,
und wobei die mit Polyolefinen extrusionsbeschichteten Vliesbahnen erfindungsgemäß nach einem Verfahren hergestellt worden sind, bei dem Vliesbahnen mit einem Flächengewicht von 10 bis 70 g/m², bevorzugt 20 bis 40 g/m², mit vorgenannten Mischungen aus Polyolefinen und 10 bis 60 Masse%, bezogen auf die Summe der Polyolefine, an organischen und/oder anorganischen Füllstoffen, wobei der Restfeuchtigkeitsgehalt der Mischungen bevorzugt unter 600 ppm liegt, aus der Schmelze bei Massetemperaturen von 170 bis 290°C und Anlagengeschwindigkeiten von 50 bis 300 m/min, bevorzugt 150 bis 250 m/min, extrusionsbeschichtet worden sind, und die beschichteten Vliesbahnen bei Temperaturen von 60 bis 0 grd unterhalb der Kristallisationstemperatur der Extrusionsbeschichtungen aus Polyolefinen einer Längsverstreckung von 1 : 1,1 bis 1 : 6, bevorzugt 1 : 1,1 bis 1 : 2, und nachfolgend bei Temperaturen von 80 bis 1 grd, bevorzugt 60 bis 2 grd., unterhalb der Schmelztemperatur der Extrusionschichtungen aus Polyolefinen einer Querverstreckung von 1 :1,1 bis 1 : 6, bevorzugt 1 : 1,1 bis 1 : 2, unterzogen worden sind, wobei die Weißbruchtrübung durch die Verstreckung, insbesondere die Längsverstreckung, erzielt wird.

Die in den Extrusionsbeschichtungen der erfindungsgemäßen extrusionsbeschichteten Vliesbahnen enthaltenen Propylenhomopolymere bzw. Propylencopolymere sind bevorzugt unter Anwendung von Ziegler-Natta-Katalysatoren oder Metallocenkatalysatoren hergestellte Propytenhpmppotymere und/oder Copolymere aus Propylen, Ethylen und/oder α-Olefinen mit 4 bis 18 C-Atomen mit einem Propylengehalt von 75,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 150 g/10 min bei 230°C/ 2,16 kg. Besonders geeignet sind dabei Propylen-Homopolymere mit bimodaler Molmassenverteilung, Molmassen-Gewichtsmitteln M_{w} von 50000 bis 1500000 g/mol, Molmassen-Zahlenmitteln Mₙ von 25000 bis 100000 g/mol und M_{w} / Mₙ -Werten von 2 bis 60, die in einer Reaktorkaskade hergestellt wurden.

Weiterhin können die in den Extrusionsbeschichtungen der erfindungsgemäßen extrusionsbeschichteten Vliesbahnen enthaltenen Propylenhomopolymere bzw. Propylencopolymere insbesondere aus einer Polyolefinmischung mit einem M_{w}/Mₙ-Verhältnis von 2 bis 6 und einem Schmelzindex von 1 bis 40 g/10 min bei 230°C/2,16 kg bestehen, die sich aus
1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, zusammensetzt.

Beispiele für diese Polyolefinmischungen aus kristallinen Copolymeren und elastischen Copolymeren sind die in EP 400 333 oder EP 472 946 beschriebenen Polymermischungen.

Die in den Extrusionsbeschichtungen der erfindungsgemäßen extrusionsbeschichteten Vliesbahnen enthaltenen Propylenhomopolymere bzw. Propylencopolymere können insbesondere ebenfalls weitgehend amorphe Polypropylene oder Propylen-Copolymere sein, die eine Anteil an kristallinem Polypropylen bzw. kristallinem Propylen-Copolymer unter 10 Masse% , eine Schmelzenthalpie unter 40 J/g und einen Schmelzindex von 0,1 bis 100 g/10 min bei 230°C/2,16 kg besitzen, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist.

Diese weitgehend amorphen Polypropylene oder Propylen-Copolymere sind insbesondere Stereoblock-Polypropylene, die beispielsweise unter Anwendung hochaktiver, Metalloxid-fixierter Ziegler-Natta-Katalysatoren [Collette, J., Macromolecules 22 (1989), 3851-3858; DE 2830160] oder löslicher Ziegler-Natta-Katalysatoren [de Candia, F., Makromol. Chem. 189 (1988), 815-821], gegebenenfalls unter nachfolgender Reaktivmodifizierung (EP 636863) und/oder Degradation (EP 640 850), hergestellt werden.

Schließlich können die in den Extrusionsbeschichtungen der erfindungsgemäßen extrusionsbeschichteten Vliesbahnen enthaltenen Propylenhomopolymere bzw. Propylencopolymere bevorzugt nichtisotaktische Propylen-Homopolymere mit einem Schmelzpunkt von 145 bis 165°C, einer Schmelzviscosität über 200 Pa·s (200000 cps) bei190°C, einer Kristallisationswärme von 16,7-41,8 J/g (4 bis 10 cal/g) und einem in Diethylether löslichen Anteil von 35 Masse% bis 55 Masse% sein. Beispiele für diese nichtisotaktischen Propylen-Homopolymere sind die in EP 475 307 oder EP 475 308 beschriebenen Produkte.

Die modifizierten Propylenpolymere b), die in den Extrusionsbeschichtungen der erfindungsgemäßen extrusionsbeschichteten Vliesbahnen enthalten sind, sind bevorzugt modifizierte Propylenpolymere, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und/oder mit ionisierender Strahlung bzw. thermisch zerfallenden Radikalbildnern hergestellt worden sind.

Beispiele für diese durch Behandlung von Polypropylenen mit mehrfunktionell ethylenisch ungesättigten Monomeren und/oder ionisierender Strahlung bzw. thermisch zerfallenden Radikalbildnem hergestellten modifizierten Propylenpolymeren b) sind insbesondere:
- modifizierte Polypropylene durch Umsetzung von Polypropylenen mit Bismaleimidoverbindungen in der Schmelze (EP 574 801 ; EP 574804),
- modifizierte Polypropylene durch Behandlung von Polypropylenen mit ionisierender Strahlung in fester Phase (EP 190889; EP 634454),
- modifizierte Polypropylene durch Behandlung von Polypropylenen mit Peroxiden in fester Phase (EP 384431; DE 4340194) bzw. in der Schmelze (EP 142 724),
- modifizierte Polypropylene durch Behandlung von Polypropylenen mit mehrfunktionell ethylenisch ungesättigten Monomeren unter Einwirkung ionisierender Strahlung (EP 678527),
- modifizierte Polypropylene durch Behandlung von Polypropylenen mit mehrfunktionell ethylenisch ungesättigten Monomeren in Gegenwart von Peroxiden in der Schmelze (EP 688817; EP 450342).

Eine bevorzugte Variante für modifizierte Propylenpolymere b), die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildnem hergestellt wurden, sind modifizierte Propylenpolymere b), nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
   1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ - Werten von 5 bis 60, die in einer Reaktorkaskade unter Einsatz von Ziegler-Natta-Katalysatoren oder Metallocenkatalysatoren hergestellt wurden, und/oder aus
   1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
   in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestern als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄- bis C₁₀- Diene und/oder C₇- bis C₁₀- Divinylverbindungen, durch die Polypropylenpartikel aus der Gasphase, bevorzugt in kontinuierlichen Durchflußmischem als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetem oder Extrudern, vorzugsweise in Doppeischneckenextrudem, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,05 bis 1 Masse% Nukleierungsmittel und/oder 0,01 bis 5 Masse% Verarbeitungshilfsmittel, bezogen auf das eingesetzte Polypropylen, zugesetzt worden sind.

Bevorzugt werden als modifizierte Propylenpolymere b) die in den Extrusionsbeschichtungen der erfindungsgemäßen extrusionsbeschichteten Vliesbahnen enthalten sind, ebenfalls modifizierten Propylenpolymere, die durch Umsetzung von funktionalisierten Polypropylenen, bevorzugt von Säure- und/oder Säureanhydridgruppen enthaltenden Polypropylenen, mit mehrfunktionellen Verbindungen entgegengesetzter Reaktivität, bevorzugt mit C₂₋ bis C₁₆ - Diaminen und/oder C₂ - bis C₁₆ - Diolen, hergestellt wurden.

Beispiele für die durch polymeranaloge Umsetzungen erzeugten modifizierten Propylenpolymere b) sind insbesondere:
- modifizierte Polypropylene durch Umsetzung von Maleinsäureanhydridgepfropftem Polypropylen mit Diaminen oder Polyglycolen (EP 177401; JP 08 176 365).
- modifizierte Polypropylene durch Umsetzung von Säure- oder Säureanhydridgruppen enthaltenden Polypropylenen mit Epoxy-, Hydroxy- oder Aminogruppen enthaltenden Polymeren (EP 307684; EP 299486)

Weiterhin werden als modifizierte Propylenpolymere b), die in den Extrusionsbeschichtungen der erfindungsgemäßen extrusionsbeschichteten Vliesbahnen enthalten sind, modifizierte Propylenpolymere bevorzugt, die durch hydrolytische Kondensation von Polypropylenen, die hydrolysierbare Silangruppen enthalten, hergestellt wurden. Beispiele bilden die in DE 4107635 oder US 47 14 716 beschriebenen Produkte.

Der besondere Vorteil des Einsatzes der modifizierten Propylenpolymeren b) bei der Herstellung der erfindungsgemäßen extrusionsbeschichteten Vliesbahnen mit Propylenpolymeren und Füllstoffen enthaltenden Beschichtungsrezepturen besteht in der erhöhten Anlagengeschwindigkeit und der Möglichkeit der Herstellung von extrusionsbeschichteten Vliesbahnen mit bedeutend dünneren Beschichtungen, was zu erheblichen Vorteilen in Bezug auf die Verbundeigenschaften führt.

In den Extrusionsbeschichtungen der erfindungsgemäßen extrusionsbeschichteten Vliesbahnen sind weiterhin als Hilfsstoffe 0,01 bis 2,5 Masse% Stabilisatoren, 0,01 bis 1 Masse% Verarbeitungshilfsmittel, jeweils bezogen auf die Summe der Polyolefine, und gegebenenfalls 0,1 bis 1 Masse% Antistatika und/oder 0,05 bis 1 Masse% Nukleierungsmittel, jeweils bezogen auf die Summe der Polyolefine, enthalten.

Die in den Extrusionsbeschichtungen der erfindungsgemäßen extrusionsbeschichteten Vliesbahnen enthaltenen Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten, 0,01 bis 0,6 Masse% Hochtemperaturstabilisatoren auf Basis von Disulfiden und Thioäthern und/oder 0,01 bis 0,8 Masse% sterisch gehinderten Aminen (HALS) .

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert,Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den Extrusionsbeschichtungen der erfindungsgemäßen extrusionsbeschichteten Vliesbahnen gegebenenfalls enthaltenen Nukleierungsmittel sind bevorzugt α-Nukleierungsmittel wie Talkum, Sorbite und Sorbitderivate, Natriumbenzoat oder das Natriumsalz der Methylen-bis(2,4-di-tert.bu-tylphenol)-phosphorsäure oder β-Nukleierungsmittel wie Adipinsäure, Adipinsäuredianilid, Chinacridinonchinon, Salze von Dicarbonsäuren wie Calciumpimelat und/oder N,N'-Dicyclododecyl-4,4-biphenyldicarboxamid.

Als Füllstoffe enthalten die Extrusionsbeschichtungen der ernndungsgemäßen extrusionsbeschichteten Vliesbahnen insbesondere Füllstoffe mit einer mittleren Partikelgröße von 0,5 bis 2 µm.

Die anorganischen Füllstoffe in den Extrusionsbeschichtungen der erfindungsgemäßen extrusionsbeschichteten Vliesbahnen sind bevorzugt Calciumcarbonate.

Der Restfeuchtigkeitsgehalt der Polyolefinmischungen für die Extrusionsbeschichtungen unmittelbar vor der Beschichtungsherstellung liegt bevorzugt unter 300 ppm, besonders bevorzugt unter 100 ppm.

Bei der Herstellung der extrusionsbeschichteten Vliesbahnen werden insbesondere Vliesbahnen eingesetzt, die nach der Spinnvliestechnologie hergestellt worden sind.

Die erfindungsgemäßen extrusionsbeschichteten Vliesbahnen sind bevorzugt für einen Einsatz auf den Sektoren Verpackung, insbesondere für atmungsaktive Lebensmittel-, Waschmittel- und Arzneimittelverpackung; Textil- und Bekleidungsindustrie, insbesondere für atmungsaktive industrielle Schutzbekleidung, Sport- und Militärkleidung, Einlagestoffe und dekorative Abdeckvliese; Hygieneindustrie, insbesondere für atmungsaktive Babywindeln, Windelhosen, Inkontinenzprodukte, Slipeinlagen und Damenbinden; Medizin, insbesondere für atmungsaktive OP-Kleidung, Infektionsschutzkleidung, Tisch- und Bettauflagen; Bauwesen, insbesondere für atmungsaktive Trennvliese und Dachunterspannbahnen; Fahrzeug-, Geräte- und Maschinenbau, Elektrotechnik, Elektronik, Transportverpackung, Haushaltsgeräte sowie Büro- und Organisationsbedarf geeignet.

Die Erfindung wird durch nachfolgende Beispiele erläutert;

### Beispiel 1

### 1.1 Herstellung des modifizierten Propylenpolymeren b):

In einen kontinuierlichen beheizbaren Durchlaufmischer wird ein pulverförmiges Polypropylen-Homopolymer (Schmelzindex von 3,2 g/10 min bei 230°C/2,16 kg, mittlerer Partikeldurchmesser 0,25 mm) kontinuierlich dosiert. Weiterhin werden in den Durchlaufmischer 0,1 Masse % Calciumstearat und 0,06 Masse % Bis(tert.butylperoxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 4,5 min bei 45°C durch ein Butadien-Stickstoff-Gemisch mit 0,07 Masse % Butadien, bezogen auf das Polypropylen-Homopolymer, sorptiv beladen. Nach Überführung in einen Doppelschneckenextruder wird das pulverförmige Reaktionsgemisch in Kontakt mit dem eindosierten Butadien-Stickstoff-Gemisch unter Zusatz von 0,1 Masse% Tetrakis[methylen(3,5-di-tert.butylhydroxyhydrocinnamat)]methan und 0,1 Masse% Tris(2,4-di-tert.butylphenyl)phosphit) bei einer Massetemperatur von 230°C aufgeschmolzen, nach einer Grobentgasung unter Eindosierung von Wasser als Schleppmittel einer Feinentgasung unterzogen, ausgetragen und granuliert.

Das resultierende modifizierte Polypropylen besitzt einen IR-spektroskopisch ermittelten Gehalt an gebundenem Butadien von 0,05 Masse %, einen Schmelzindex von 4,9 g/10 min bei 230°C/2,16 kg und einen Kristallisationspunkt (DSC) von 126,8°C.

### 1.2 Herstellung der Polypropylenmischung:

Eine Mischung aus
10 Masse % eines modifizierten Propylenpolymers [Gehalt an gebundenem Butadien 0,05 % Masse, Schmelzindex 4,9 g/10 min bei 230 °C / 2,16 kg, Kristallisationspunkt (DSC) 126,8 °C],
50 % Masse einer heterophasischen Polypropylenmischung aus einem kristallinen Propylen-Ethylen-Copolymer (Schmelzindex 19,8g / 10 min bei 230°C/ 2,16 kg, M_{W} /M_{N} - Verhältnis 3,7),
40 %Masse % einer beschichteten Kreide mit einem Partikeldurchmesser, gemessen über die längste Ausdehnung der Partikel, von 1 µm,
wird in einem Werner & Pfleiderer Doppelschneckenextruder ZSK 92, Temperaturprofil 120/150/190/210/240/210/210/200 °C, aufgeschmolzen, homogenisiert, ausgetragen und granuliert.

Das resultierende Polypropylencompound besitzt einen Schmelzindex von 8,4 /10 min bei 230 °C/2,16 kg und eine Dichte von 1,28 g/cm³ bei 23°C.

### 1.3 Herstellung des Verbundes mit textilem Charakter

Auf einer Cast-Coatinganlage (Ø 120mm, 33D) bestehend aus Plastifizierextruder mit Breitschlitzdüse wird das Compound nach dem Vortrocknen (bei 80°C / 3h, Restfeuchtegehalt 80 ppm) im Extruder bei einem Temperaturprofil 180/180/145/145/200/210/220/220/220/220/220/220/220/220 °C aufgeschmolzen und die Schmelze durch die Breitschlitzdüse bei einer Düsentemperatur von 220°C direkt auf ein zugeführtes Polypropylen-Spinnvlies (Flächengewicht 30 g/m²,

| | | |
|---|---|---|
| Zugfestigkeit längs: | 8,2 MPa, Zugfestigkeit quer. | 4,5 MPa |
| Zugdehnung längs: | 108,7 %, Zugdehnung quer: | 94,5 % |
| Reißfestigkeit längs: | 6,6 MPa, Reißfestigkeit quer: | 3,0 MPa |
| Reißdehnung längs: | 113,1 %, Reißdehnung quer: | 99,5%) |

bei einer Anlagengeschwindigkeit von 170 m/min extrudiert.

Nach dem Fixieren der Schmelze auf dem Vlies wird der Gesamtverbund während des Abziehens auf einen Temperaturbereich unterhalb des Kristallisationsberöiches der Polypropylenmischung abgekühlt, randbeschnitten und aufgewickelt. Dieser unverstreckte Verbund weist folgende Eigenschaften auf:

| Gesamtes Flächengewicht: 60 g/m² | | | |
|---|---|---|---|
| Zugfestigkeit längs: | 6,01 MPa, | Zugfestigkeit quer: | 2,6 MPa |
| Zugdehnung längs: | 103,3%. | Zugdehnung quer: | 44,6 % |
| Reißfestigkeit längs: | 4,55 MPa, | Reißfestigkeit quer: | 1,49 MPa |
| Reißdehnung längs: | 106,5 %, | Reißdehnung quer: | 61,6 % |

Anschließend wird der Verbund bei einem Reckverhältnis von 1 : 1,7 und Temperaturen im Bereich von 40-120 °C längsverstreckt bzw. einem Reckverhältnis von 1 : 1,5 und Temperaturen im Bereich von 100-140 °C querverstreckt.

Speziell beim Längsverstrecken als auch beim Querverstrecken kommt es zur Ausprägung der charakteristischen Weißbruchtrübung.

Der biaxial verstreckte Verbund mit textilem Charakter besitzt folgende Eigenschaften :

| Gesamtes Flächengewicht: 28 g/m² | | | |
|---|---|---|---|
| Zugfestigkeit längs: | 8,9 MPa, | Zugfestigkeit quer: | 5,9 Mpa |
| Zugdehnung längs: | 23,2%, | Zugdehnung quer: | 16 % |
| Reißfestigkeit längs: | 6,26 MPa, | Reißfestigkeit quer: | 4,68 MPa |
| Reißdehnung längs: | 28.2%, | Reißdehnung quer: | 18,6% |
| Porenfläche: | 95 % aller Poren haben eine Fläche ≤ 0,18 µm² | | |
| Größte gemessene Pore: | 0,64 µm² Porenfläche | | |
| Porengrößenverteitung: | 96,3 % aller Poren liegen im Bereich von 0,03-0,20 µm² Porenfläche | | |

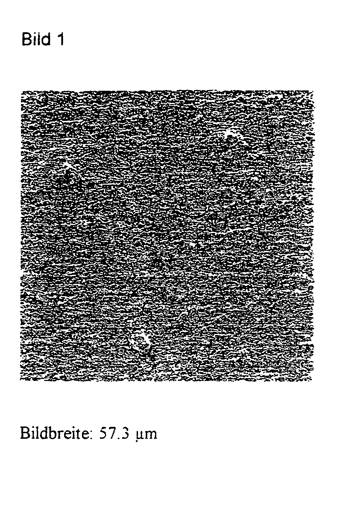

Die SEM-Aufnahme Bild 1 charakterisiert die Struktur des Verbundes.

### Beispiel 2

### 2.1 Herstellung der Polypropylenmischung

Eine Mischung aus
20 Masse % eines modifizierten Polypropylenpolymeren [Schmelzindex 10,8 g / 10 min bei 230 °C / 2,16 kg, 16 kg, Kristallisationspunkt (DSC) 125,3 °C]
50 % eines CR-PP Polypropylenhomopolymers (Schmelzindex 25,8 g /10 min bei 230 °C /2,16 kg, M_{w} / M_{N}-Verhältnis = 2,8) und
30 Masse % eines kompaktierten Talkums mit einem Partikeldurchmesser, gemessen über die längste Ausdehnung der Partikel, von 3 µm,
wird in einem Werner & Pfleiderer Doppelschneckenextruder ZSK 133, Temperaturprofil 150/180/200/220/250/220/220/210 °C, aufgeschmolzen, homogenisiert, ausgetragen und granuliert.

Das resultierende Polypropylencompound besitzt einen Schmelzindex von 14,4 g / 10 min bei 230 °C / 2,16 kg und einer Dichte von 1,15 g / cm³.

### 2.2 Herstellung des Verbundes mit textilem Charakter

Nach dem Vortrocknen bei 150 °C / 4h hat das Compound einen Restfeuchtigkeitsgehalt von 250 ppm.

Auf einer Beschichtungsanlage (Ø 150mm, 30D), bestehend aus Plastifizierextruder mit nip roll, wird das Compound im Extruder bei einer Massetemperatur von 285 °C aufgeschmolzen und die Schmelze durch die Breitschlitzdüse bei einer Düsentemperatur von 290 °C direkt auf ein zugeführtes Polypropylen-Spinnvlies (Flächengewicht 25 g / m²) bei einer max. Anlagengeschwindigkeit von 110 m/min extrudiert. Nach dem Verfestigen der Schmelze mit dem Vlies wird der Gesamtverbund während des Abziehens auf einen Temperaturbereich unterhalb des Kristallisationsbereiches der Polypropylenmischung abgekühlt, randbeschnitten und aufgewickelt.

Anschließend wird der Verbund bei einem Reckverhältnis von 1 : 2,0 und Temperaturen im Bereich von 80 - 150 °C längsverstreckt bzw. einem Reckverhältnis von 1 : 1,8 und Temperaturen im Bereich von 110-165 °C querverstreckt. Sowohl beim Längsverstrecken als auch beim Querverstrecken kommt es zu zur Ausprägung der charakteristischen Weißbruchtrübung. Der Verbund läßt sich bei einer Geschwindigkeit von max. 100 m/min verstrecken.

Nach der Verstreckung stellt sich ein Flächengewicht des gesamten Verbundes von 24 g/ m² ein.

### Beispiel 3 (nicht erfindungsgemäß)

### 3.1 Herstellung der Polypropylenmischung

Eine Mischung aus
62,5 % eines CR-PP Polypropylenhomopolymers (Schmelzindex 25,8 g / 10 min bei 230 °C / 2,16 kg, M_{W} / M_{N}-Verhältnis = 2,8) und
37,5 Masse % eines kompaktierten Talkums mit einem Partikeldurchmesser, gemessen über die längste Ausdehnung der Partikel, von 3 µm,
wird in einem Werner & Pfleiderer Doppelschneckenextruder ZSK 133, Temperaturprofil 150/180/200/220/250/220/220/210°C. aufgeschmolzen, homogenisiert, ausgetragen und granuliert

Das resultierende Polypropylencompound besitzt einen Schmelzindex von 15,2 g /10 min bei 230 °C/2,16 kg und eine Dichte von 1,15g/cm³.

### 3.2 Herstellung des Verbundes mit textilem Charakter

Nach dem Vortrocknen bei 150 °C / 4h hat das Compound eine Restfeuchtigkeit von 70 ppm.

Auf einer Beschichtungsanlage nach Beispiel 2 wird das Compound aufgeschmolzen und die Schmelze durch die Breitschlitzdüse bei einer Düsentemperatur von 290 °C direkt auf ein zugeführtes Polypropylen-Spinnvlies (Flächengewicht 25 g / m²) extrudiert. Eine sichere Beschichtungsproduktion ist bis zu einer Anlagengeschwindigkeit von 65 m/min möglich. Ab einer Geschwindigigkeit von 70 m/min kommt es zu draw variations (Pumpen) im Randbereich sowie zum Aufreißen von Mikrolöchern. Es ist eine sichere und wirtschaftliche Produktion > 70 m /min nicht möglich.

Beim anschließenden Verstrecken der bei 65 m/min beschichteten Laminate bei denselben Bedingungen wie in Beispiel 2 kommt es ab ca. 50m/min Abzugsgeschwindigkeit zu Unregelmäßigkeiten in der Verstreckung und daraus resultierend zu unterschiedlichen Flächengewichten.

### Beispiel 4 (nicht erfindungsgemäß)

### 4.1 Herstellung der Polyethylenmischung

Eine Mischung aus
50 Masse % eines LDPE - Homopolymers (hergestellt im Autoklavenprozeß, Schmelzindex 15 g/10 min bei 190/2,16 kg;) und
50 Masse % einer beschichteten Kreide mit einem Partikeldurchmesser, gemessen über die längste Ausdehnung der Partikel, von 2 µm,
wird in einem Doppelschneckenextruder ZSK 40, Temperaturprofil 100/150/180/200/220/200/200/190 °C, aufgeschmolzen, homogenisiert, ausgetragen und granuliert.

Das resultierende Polyethylencompound besitzt einen Schmelzindex von 9,8g / 10 min bei 190°C / 2,16 kg und eine Dichte von 1,35 g/cm³.

### 4.2 Herstellung des Verbundes mit textilem Charakter

Nach der Vortrocknung bei 70 °C / 5 h besitzt das Compound eine Restfeuchte von 50 ppm.

Auf einer Cast-Coatinganlage (0 120 / 33D), bestehend aus Plastifizierextruder mit Breitschlitzdüse, wird das Compound im Extruder bei einer Massetemperatur von 210 °C aufgeschmolzen und die Schmelze durch die Breitschlitzdüse bei einer Düsentemperatur von 200 °C direkt auf ein zugeführtes Polyethylen-Spinnvlies (Flächengewicht 40 g/m²) bei einer Anlagengeschwindigkeit von 250 m/min extrudiert. Nach dem Anpressen der Schmelze (Beschichtungsgewicht ca. 12 g/m²) mittels elektrostatischer Fixierung auf das Vlies wird der Gesamtverbund abgekühlt, randbeschnitten und aufgewickelt.

Anschließend wird der Verbund bei einem Reckverhältnis von 1 : 2,5 und Temperaturen im Bereich von 30-100°C längsverstreckt und einem Reckverhältnis von 1 : 1,9 und Temperaturen im Bereich von 80-125 °C querverstreckt. Sowohl beim Längsverstrecken als auch beim Querverstrecken kommt es zur Ausprägung der charakteristischen Weißbrucktrübüng. Der Verbund läßt sich mit einer Geschwindigkeit bis zu 220 m/min problemlos verstrecken.

Nach der Verstreckung stellt sich ein Flächengewicht des gesamten Verbundes von 26 g / m² ein, wobei das Gewicht der Extrusionsbeschichtung lediglich ca. 6 g/m² beträgt.

### Beispiel 5 (Vergleichsbeispiel)

Auf einer Standard-Castfolienanlage, bestehend aus Plastifizierextruder mit Breitschlitzdüse wird das unter denselben Bedingungen vorgetrocknete Polyethylencompound nach Beispiel 4 bei einer Massetemperatur von 230 °C aufgeschmolzen und die Schmelze durch die Breitschlitzdüse bei einer Düsentemperatur von 220 °C direkt auf dasselbe wie in Beispiel 4 angeführte Polyethylen-Spinnvlies (Flächengewicht 40 g/m²) extrudiert. Die Schmelze wird hier mittels Luftrakel fixiert. Es wurde versucht, mit dieser Technologie eine Folie mit gleichem Flächengewicht bei den gleich hohen Abzugsgeschwindigkeiten entsprechend Beispiel 4 zu fahren.

Es konnte jedoch nur eine Folie mit einem max. Flächengewicht von 16 g/m² bei einer max. Geschwindigkeit von 150 m/min produziert werden. Darüberhinaus kam es zu ungleichmäßiger Dickenverteilung bzw. zum Pumpen und zu geringer Haftung. Die Folie konnte nicht mehr gleichmäßig stabilisiert werden.

### Beispiel 6 (Vergleichsbeispiel)

Es wurde versucht, die Polyethylenmischung nach Beispiel 4 unter den Bedingungen von Beispiel 5 zu einer Folie mit dem gleichen Flächengewicht - ohne Berücksichtigung der Nachstellung der Abzugsgeschwindigkeit - zu verarbeiten.

Bei einer Anlagengeschwindigkeit von 50 m/min konnte eine relativ stabile Fahrweise zur Herstellung einer Folie mit ca. 12 g/m² erzielt werden. Gegenüber den Prozeßdaten wie im Vergleichsbeispiel 5 bedeutet dies jedoch eine Ausstoßreduktion von ca. 80 % - eine solche Produktion ist für die Herstellung von Hygienefolien für den Windelbereich absolut unwirtschaftlich.
Mit dieser dünnen, 12 g/m² schweren Folie wurde anschließend versucht, ein PE-Spinnvlies (40 g/m², entsprechend Beispiel 4) mittels Kleber zu kaschieren. Es war sehr schwierig, diese extrem spröde Folie abzuwickeln und mit dem PE-Spinnvlies mittels Kleber zu verbinden. Es kam aufgrund der hohen Sprödigkeit der Folie laufend zu Abrissen, zudem war es sehr schwierig, eine solch dünne Folie zu führen. Letztlich konnte bei einer Geschwindigkeit von max. 20 m/min eine Rolle mit nur 1 Abriß produziert werden.
Eine solche Produktion ist jedoch in keiner Weise sicher und völlig unwirtschaftlich.

### Beispiel 7 (Vergleichsbeispiel)

Mit der PE-Mischung nach Beispiel 4 wurde versucht , eine vergleichbare Blasfolie bei den Abzugsgeschwindigkeiten und dem Foliengewicht entsprechend Beispiel 6 herzustellen.

Auf einer Blasfolienanlage (0 90mm, 30D) wurde das im Beispiel 4 eingesetzte, vorgetrocknete PE-Compound bei Massetemperaturen von 190 °C und einer Düsentemperatur von 185 °C zu einer Blasfolie bei einem Aufblasverhältnis von 1:4 und einer Halslänge von 1,5 D (Düsendurchmesser 150, Spalt 0,8 mm) verarbeitet. Es konnte eine Folie mit einem Flächengewicht von max. 19 g/m² bei einer Abzugsgeschwindigkeit von 130 m/min erreicht werden. Darüberhinaus kam es zu Instabilitäten in der Folienblase bzw. zu schlechtem Wickelverhalten.

Es wurde ebenfalls versucht, eine 12 g/m² dicke Folie mittels dieser Technologie herzustellen - dies war jedoch nicht möglich, bedingt durch laufende Abrisse der Folienblase.

## Patentansprüche

1. Einseitig mit Polyolefinen extrusionsbeschichtete Vliesbahnen mit textilem Charakter, einer Zugfestigkeit von 4 bis 20 MPa in Längsrichtung und 2 bis 15 MPa in Querrichtung und einem gesamten Flächengewicht von 10 bis 100 g/m²,
wobei die Extrusionsbeschichtungen aus Polyolefinen ein Flächengewicht von 5 bis 70 g/m², bevorzugt 6 bis 40 g/m², eine Weißbruchtrübung von 0,1 bis 5%, bevorzugt von 0,1 bis 2%, eine Porenflächenverteilung, bei der mindestens 90% aller Poren im Bereich von 0,03 bis 0,20 µm² liegen und die maximale Porenfläche kleiner als 1 µm ist, besitzen,
und wobei die Vliesbahnen aus Polyethylen und/oder Polypropylen und/oder Polyethylenterephthalat und/oder Polyamid bestehen und ein Flächengewicht von 5 bis 100 g/m², bevorzugt 10 bis 40 g/m², besitzen,
**dadurch gekennzeichnet, daß** die Extrusionsbeschichtungen aus Polyolefinen aus
a) Propylenhomopolymeren bzw. Copolymeren aus 70 bis 99 Masse% Propylen und 30 bis 1 Masse% Ethylen und/oder α-Olefinen mit 4 bis 18 C-Atomen,
b) 1 bis 50 Masse%, vorzugsweise 5 bis 30 Masse%, bezogen auf die Propylenpolymere a), modifizierten Propylenpolymeren mit Schmelzindices von 0,1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95,
c) 10 bis 60 Masse%, bezogen auf die Summe der Polyolefine, an organischen und/oder anorganischen Füllstoffen mit einem Partikeldurchmesser, gemessen über die längste Ausdehnung der Partikel, von 0,1 bis 10 µm, bevorzugt 0,5 bis 5 µm, und
d) 0,01 bis 2,5 Masse% Stabilisatoren, 0,01 bis 1 Masse% Verarbeitungshilfsmitteln, jeweils bezogen auf die Summe der Polyolefine, und gegebenenfalls 0,1 bis 1 Masse% Antistatika und/oder 0,05 bis 1 Masse% Nukleierungsmitteln, jeweils bezogen auf die Summe der Polyolefine, als Hilfsstoffe
bestehen,
und daß die mit Polyolefinen extrusionsbeschichteten Vliesbahnen nach einem Verfahren hergestellt worden sind, bei dem Vliesbahnen mit einem Flächengewicht von 10 bis 70 g/m², bevorzugt 20 bis 40 g/m², mit vorgenannten Mischungen aus Polyolefinen und 10 bis 60 Masse%, bezogen auf die Summe der Polyolefine, an organischen und/oder anorganischen Füllstoffen, wobei der Restfeuchtigkeitsgehalt der Mischungen bevorzugt unter 600 ppm liegt, aus der Schmelze bei Massetemperaturen von 170 bis 290°C und Antagengeschwindigkeiten von 50 bis 300 m/min. bevorzugt 150 bis 250 m/min, extrusionsbeschichtet worden sind, und die beschichteten Vliesbahnen bei Temperaturen von 60 bis 0 grd unterhalb der Kristallisationstemperatur der Extrusionsbeschichtungen aus Polyolefinen einer Längsverstrecküng von 1 : 1,1 bis 1 : 6, bevorzugt 1 : 1,1 bis 1 : 2, und nachfolgend bei Temperaturen von 80 bis 1 grd, bevorzugt 60 bis 2 grd., unterhalb der Schmelztemperatur der Extrusionsbeschichtungen aus Polyolefinen einer Querverstreckung von 1 :1,1 bis 1 : 6, bevorzugt 1 : 1,1 bis 1 : 2, unterzogen worden sind, wobei die Weißbruchtrübung durch die Verstreckung, insbesondere die Längsverstreckung, erzielt wird.

2. Extrusionsbeschichtete Vliesbahnen nach Anspruch 1, **dadurch gekennzeichnet, daß** die in den Extrusionsbeschichtungen enthaltenen Propylenhomopolymere bzw. Propylencopolymere aus
1) unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 75,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 150 g/10 min bei 230°C/2,16 kg, und/oder
2) einer Polyolefinmischung mit einem M_{w}/Mₙ-Verhältnis von 2 bis 6 und einem Schmelzindex von 1 bis 40 g/10 min bei 230°C/2,16 kg, die aus
2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht,
und/oder
3) weitgehend amorphen Polypropylenen oder Propylen-Copolymeren mit einem Anteil an kristallinem Polypropylen bzw. kristallinem Propylen-Copolymer unter 10 Masse%, einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist,
und/oder
4) nichtisotaktischen Propylen-Homopolymeren mit einem Schmelzpunkt von 145 bis 165°C, einer Schmelzviscosität über 200 Pa·s (200000 cps) bei190°C, einer Kristallisationswärme von 16.7-41.8 J/g (4 bis 10 cal/g) und einem in Diethylether löslichen Anteil von 35 Masse% bis 55 Masse%,
bestehen.

3. Extrusionsbeschichtete Vliesbahnen nach einem oder mehreren der Ansprüche 1 bis 2, **dadurch gekennzeichnet, daß** die in den Extrusionsbeschichtungen enthaltenen modifizierten Propylenpolymere modifizierte Propylenhomopolymere und/oder modifizierte Propylencopolymere sind, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene
- mit mehrfunktionell ethylenisch ungesättigten Monomeren und/oder
- mit ionisierender Strahlung bzw. thermisch zerfallenden Radikalbildnern hergestellt worden sind.

4. Extrusionsbeschichtete Vliesbahnen nach Anspruch 3, **dadurch gekennzeichnet, daß** die in den Extrusionsbeschichtungen enthaltenen modifizierten Propylenpolymere modifizierte Polypropylene sind, die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildnern nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ - Werten von 5 bis 60, die in einer Reaktorkaskade unter Einsatz von Ziegler-Natta-Katalysatoren oder Metallocenkatalysatoren hergestellt wurden, und/oder aus
1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestern als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄- bis C₁₀- Diene und/oder C₇- bis C₁₀- Divinylverbindungen, durch die Polypropylenpartikel aus der Gasphase, bevorzugt in kontinuierlichen Durchflußmischem als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetem oder Extrudern, vorzugsweise in Doppelschneckenextrudern, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel und/oder 0,01 bis 5 Masse% Verarbeitungshilfsmittel, bezogen auf das eingesetzte Polypropylen, zugesetzt worden sind.

5. Extrusionsbeschichtete Vliesbahnen nach einem oder mehreren der Ansprüche 1 bis 4, **dadurch gekennzeichnet, daß** als Füllstoffe Füllstoffe mit einer mittleren Partikelgröße von 0,5 bis 2 µm eingesetzt werden.

6. Extrusionsbeschichtete Vliesbahnen nach einem oder mehreren der Ansprüche 1 bis 5, **dadurch gekennzeichnet, daß** als anorganische Füllstoffe Calciumcarbonate eingesetzt werden.

7. Extrusionsbeschichtete Vliesbahnen nach einem oder mehreren der Ansprüche 1 bis 6, **dadurch gekennzeichnet, daß** der Restfeuchtigkeitsgehalt der Polyolefinmischungen für die Extrusionsbeschichtungen unmittelbar vor der Beschichtungsherstellung unter 300 ppm, bevorzugt unter 100 ppm, liegt.

8. Extrusionsbeschichtete Vliesbahnen nach einem oder mehreren der Ansprüche 1 bis 7, **dadurch gekennzeichnet, daß** Vliesbahnen eingesetzt werden, die nach der Spinnvliestechnologie hergestellt worden sind.

9. Verwendung von extrusionsbeschichteten Vliesbahnen nach einem oder mehreren der Ansprüche 1 bis 8 auf den Sektoren Verpackung, insbesondere für atmungsaktive Lebensmittel-, Waschmittel- und Arzneimittelverpackung; Textil- und Bekleidungsindustrie, insbesondere für atmungsaktive industrielle Schutzbekleidung, Sport- und Militärkleidung, Einlagestoffe und dekorative Abdeckvliese; Hygieneindustrie, insbesondere für atmungsaktive Babywindeln, Windelhosen, Inkontinenzprodukte, Slipeinlagen und Damenbinden; Medizin, insbesondere für atmungsaktive OP-Kleidung, Infektionsschutzkleidung, Tisch- und Bettauflagen; Bauwesen, insbesondere für atmungsaktive Trennvliese und Dachunterspannbahnen; Fahrzeug-, Geräte- und Maschinenbau, Elektrotechnik, Elektronik, Transportverpackung, Haushaltsgeräte und Büro- und Organisationsbedarf.

## Claims

1. Nonwoven sheeting extrusion-coated on one side with polyolefins, having a textile character, a tensile strength of 4 to 20 MPa in the longitudinal direction and 2 to 15 MPa in the transverse direction and a total weight per unit area of 10 to 100 g/m²,
the extrusion coatings comprising polyolefins having a weight per unit area of 5 to 70 g/m², preferably 6 to 40 g/m², a white crackling cloudiness of 0.1 to 5%, preferably of 0.1 to 2%, a pore area distribution for at least 90% of all pores ranging from 0.03 to 0.20 µm², the maximum pore area being less than 1 µm,
and the nonwoven sheeting comprising polyethylene and/or polypropylene and/or polyethylene terephthalate and/or polyamide and having a weight per unit area of 5 to 100 g/m², preferably 10 to 40 g/m²,
**characterized in that** the extrusion coatings comprising polyolefins comprise
a) propylene homopolymers or copolymers of 70 to 99% by mass of propylene and 30 to 1% by mass of ethylene and/or α-olefins with 4 to 18 carbon atoms,
b) 1 to 50% by mass, preferably 5 to 30% by mass, based on the propylene polymers a), of modified propylene polymers with melt indexes of 0.1 to 50 g/10 min at 230°C/2.16 kg, preferably 1 to 40 g/10 min at 230°C/2.16 kg, and a ratio of the intrinsic viscosity of the modified polypropylene to the intrinsic viscosity of the unmodified polypropylene with largely the same weight average molecular mass of 0.20 to 0.95,
c) 10 to 60% by mass, based on the sum of the polyolefins, of organic and/or inorganic fillers with a particle diameter, measured over the major axis of the particles, of 0.1 to 10 µm, preferably 0.5 to 5 µm, and
d) 0.01 to 2.5% by mass of stabilizers, 0.01 to 1% by mass of processing aids, in each case based on the sum of the polyolefins, and optionally 0.1 to 1% by mass of antistatic agents and/or 0.05 to 1% by mass of nucleating agents, in each case based on the sum of the polyolefins, as auxiliaries,
and **in that** the nonwoven sheeting extrusion-coated with polyolefins has been produced by a method comprising extrusion-coating nonwoven sheeting with a weight per unit area of 10 to 70 g/m², preferably 20 to 40 g/m², with aforementioned mixtures of polyolefins and 10 to 60% by mass, based on the sum of the polyolefins, of organic and/or inorganic fillers, the residual moisture content of the mixtures being preferably less than 600 ppm, from the melt at mass temperatures of 170 to 290°C and at equipment speeds of 50 to 300 m/min, preferably 15 to 250 m/min, and subjecting the coated nonwoven sheeting at temperatures of 60 to 0 degrees below the crystallization temperature of the extrusion coatings comprising polyolefins to longitudinal stretching of 1:1.1 to 1:6, preferably 1:1.1 to 1:2, and subsequently at temperatures of 80 to 1 degrees, preferably 60 to 2 degrees, below the melting temperature of the extrusion coatings comprising polyolefins to transverse stretching of 1:1.1 to 1:6, preferably 1:1.1 to 1:2, the white crackling cloudiness being achieved as a result of the stretching, in particular the longitudinal stretching.

2. Extrusion-coated nonwoven sheeting according to Claim 1, **characterized in that** the propylene homopolymers and/or propylene copolymers present in the extrusion coatings comprise
1) propylene homopolymers and/or copolymers of propylene, ethylene and/or α-olefins with 4 to 18 carbon atoms, produced using Ziegler-Natta catalysts or metallocene catalysts and having a propylene content of 75.0 to 99.9% by mass in the form of random copolymers, block copolymers and/or random block copolymers, with melt indexes of 0.1 to 300 g/10 min at 230°C/2.16 kg, preferably 1 to 150 g/10 min at 230°C/2.16 kg, and/or
2) a polyolefin mixture with an M_{w}/Mₙ ratio of 2 to 6 and a melt index of 1 to 40 g/10 min at 230°C/2.16 kg, comprising
2.1) 60 to 98% by mass of a crystalline copolymer of 85 to 99.5% by mass of propylene and 15 to 0.5% by mass of ethylene and/or an α-olefin of the general formula CH₂ = CHR, in which R is a linear or branched alkyl radical with 2 to 8 carbon atoms, and
2.2) 2 to 40% by mass of an elastic copolymer of 20 to 70% by mass of ethylene and 80 to 30% by mass of propylene and/or an α-olefin of the general formula CH₂ = CHR, in which R is a linear or branched alkyl radical with 2 to 8 carbon atoms, and/or
3) largely amorphous polypropylenes or propylene copolymers which contain less than 10% by mass of crystalline polypropylene or crystalline propylene copolymer, have an enthalpy of melting of less than 40 J/g and a melt index of 0.1 to 100 g/10 min at 230°C/2.16 kg, the largely amorphous polypropylene being a homopolymer of propylene and/or a copolymer of propylene of at least 80 mol% of propylene and not more than 20 mol% of one or more α-olefins of the general formula CH₂ = CHR, in which R is a linear or branched alkyl radical with 2 to 8 carbon atoms, and/or
4) non-isotactic propylene homopolymers with a melting point of 145 to 165°C, a melt viscosity greater than 200 Pa·s (200 000 cps) at 190°C, a heat of crystallization of 16.7-41.8 J/g (4 to 10 cal/g) and a solubility of 35% to 55% by mass in diethyl ether.

3. Extrusion-coated nonwoven sheeting according to one or more of Claims 1 to 2, **characterized in that** the modified propylene polymers present in the extrusion coatings are modified propylene homopolymers and/or modified propylene copolymers which have been produced by treatment of propylene homopolymers and/or copolymers of propylene and ethylene or α-olefins with 4 to 18 carbon atoms and of mixtures of said polypropylenes
- with multifunctionally ethylenically unsaturated monomers and/or
- with ionizing radiation or thermally decomposing free radical-forming agents.

4. Extrusion-coated nonwoven sheeting according to Claim 3, **characterized in that** the modified propylene polymers present in the extrusion coatings are modified polypropylenes produced by treatment of propylene homopolymers and/or copolymers of propylene and ethylene or α-olefins with 4 to 18 carbon atoms and of mixtures of said polypropylenes with multifunctionally ethylenically unsaturated monomers and thermally decomposing free-radical-forming agents by a continuous method comprising
1) polypropylene particles in the form of powders, granulates or grit having a preferred particle size from 0.001 to 7 mm, comprising
1.1) propylene homopolymers, in particular comprising propylene homopolymers having a bimodal molecular mass distribution, weight-average molecular masses M_{w} of 500,000 to 1,500,000 g/mol, number-average molar masses Mₙ of 25,000 to 100,000 g/mol and M_{w}/Mₙ values of 5 to 60, which were synthesized in a reactor cascade using Ziegler-Natta catalysts or metallocene catalysts, and/or comprising
1.2) copolymers of propylene and ethylene or α-olefins with 4 to 18 carbon atoms, preferably random propylene copolymers, propylene block copolymers, random propylene block copolymers and/or elastomeric polypropylenes, or mixtures of said modified polypropylenes,
having been mixed in a continuous mixer with 0.05 to 3% by mass, based on the polypropylenes employed, of acyl peroxides, alkyl peroxides, hydroperoxides, peroxycarbonates and/or peresters as thermally decomposing free radical-forming agents whose thermal decomposition is concluded preferably below 210°C and which optionally are diluted with inert solvents, with heating to 30 to 100°C, preferably to 70 to 90°C,
2) volatile, bifunctional monomers, particularly C₄ to C₁₀ dienes and/or C₇ to C₁₀ divinyl compounds, which have been sorbed by the polypropylene particles from the gas phase, preferably in continuous flow mixers as continuous gas-solid absorbers, at a temperature T of 20°C to 120°C, preferably of 60 to 100°C, and an average sorption time of τₛ of 10 seconds to 1,000 seconds, preferably 60 seconds to 600 seconds, the proportion of bifunctionally unsaturated monomers in the polypropylene particles being 0.01 to 10% by mass, preferably 0.05 to 2% by mass, based on the polypropylenes used,
3) the polypropylene particles, in which the acyl peroxides, alkyl peroxides, hydroperoxides, peroxycarbonates and/or peresters, as thermally decomposing free radical-forming agents, and the bifunctionally unsaturated monomers have been sorbed, have been melted under an atmosphere of an inert gas and of these volatile bifunctional monomers at 110°C to 210°C in continuously operating kneaders or extruders, preferably in twin screw extruders, such that, at the same time, the thermally decomposing free radical-forming agents have been decomposed,
4) the melt having been heated thereafter to 220°C to 300°C, such that unreacted monomers and decomposition products have been removed, and
5) the melt having been conventionally granulated,
and in which, before step 1) and/or 5) and/or before or during step 3) and/or 4), 0.01 to 2.5% by mass of stabilizers, 0.1 to 1% by mass of antistatic agents, 0.2 to 3% by mass of pigments, 0.05 to 1% by mass of nucleating agents and/or 0.01 to 5% by mass of processing aids, based on the polypropylene used, have been added as further auxiliaries.

5. Extrusion-coated nonwoven sheeting according to one or more of Claims 1 to 4, **characterized in that** fillers used are fillers having an average particle size of 0.5 to 2 µm.

6. Extrusion-coated nonwoven sheeting according to one or more of Claims 1 to 5, **characterized in that** calcium carbonates are used as inorganic fillers.

7. Extrusion-coated nonwoven sheeting according to one or more of Claims 1 to 6, **characterized in that** the residual moisture content of the polyolefin mixtures for the extrusion coatings immediately before the coating production is less than 300 ppm, preferably less than 100 ppm.

8. Extrusion-coated nonwoven sheeting according to one or more of Claims 1 to 7, **characterized in that** nonwoven sheeting is used which has been produced by the spunbonded nonwoven technology.

9. Use of extrusion-coated nonwoven sheeting according to one or more of Claims 1 to 8 in the sectors of packaging, particularly for breathable food, detergents- and drugs-packaging; textile and clothing industry, particularly for breathable industrial protective clothing, sports and military clothing, interlinings and decorative covering nonwovens; hygiene industry, particularly for breathable diapers, incontinence pants, incontinence products, panty inserts and sanitary napkins; medicine, particularly for breathable operating room clothing, clothing to protect against infection, table covers and bed covers; construction, particularly for breathable partitioning nonwovens and roof linings; vehicle, equipment and machinery construction, electrotechnology, electronics, packaging for transport, domestic appliances, and office products.

## Revendications

1. Bandes de non-tissé à caractère textile revêtues par extrusion d'un côté de polyoléfines, d'une résistance à la traction de 4 à 20 MPa dans le sens longitudinal et de 2 à 15 MPa dans le sens transversal et d'un poids surfacique total de 10 à 100 g/m²,
dans lesquelles les revêtements par extrusion de polyoléfines présentent un poids surfacique de 5 à 70 g/m², de préférence 6 à 40 g/m², un trouble de blanchiment à la contrainte de 0,1 à 5%, de préférence de 0,1 à 2%, une distribution superficielle des pores, où au moins 90% de tous les pores sont situés dans l'intervalle compris entre 0,03 et 0,20 µm², et la surface maximale de pores est plus petite que 1 µm,
et dans lesquelles les bandes de non-tissé sont composées de polyéthylène et/ou de polypropylène et/ou de téréphtalate de polyéthylène et/ou de polyamide et présentent un poids surfacique de 5 à 100 g/m², de préférence de 10 à 40 g/m²,
**caractérisées en ce que** les revêtements par extrusion de polyoléfines sont composés :
a) d'homopolymères de propylène ou, selon le cas, de copolymères constitués de 70 à 99% en masse de propylène et de 30 à 1% en masse d'éthylène et/ou d'α-oléfines avec 4 à 18 atomes de carbone;
b) de 1 à 50% en masse, de préférence de 5 à 30% en masse, sur base des polymères de propylène a), de polymères de propylène modifiés avec des indices de fusion de 0,1 à 50 g/10 min à 230°C/2,16 kg, de préférence 1 à 40 g/10 min à 230°C/2,16 kg et d'un quotient de la viscosité limite du polypropylène modifié et de la viscosité limite du polypropylène non modifié avec une moyenne pondérale de masse molaire largement identique de 0,20 à 0,95;
c) de 10 à 60% en masse, sur base de la somme des polyoléfines, de charges organiques et/ou inorganiques avec un diamètre de particule, mesuré sur l'élongation longitudinale la plus longue des particules, de 0,1 à 10 µm, de préférence 0,5 à 5 µm, et
d) de 0,01 à 2,5% en masse de stabilisants, de 0,01 à 1% en masse d'adjuvants de traitement, chaque fois sur base de la somme des polyoléfines, et le cas échéant de 0,1 à 1% en masse d'antistatiques et/ou de 0,05 à 1% en masse d'agents de nucléation, chaque fois sur base de la somme des polyoléfines, comme adjuvants,
et **en ce que** les bandes de non-tissé revêtues par extrusion de polyoléfines sont fabriquées selon un procédé dans lequel les bandes de non-tissé d'un poids surfacique de 10 à 70 g/m², de préférence 20 à 40 g/m², sont revêtues par extrusion de la fusion à des températures de masse de 170 à 290°C et à des vitesses d'addition de 50 à 300 m/min, de préférence 150 à 250 m/min avec les mélanges susmentionnés constitués de polyoléfines et de 10 à 60% en masse, sur base de la somme des polyoléfines, de charges organiques et/ou inorganiques, la teneur résiduelle en humidité des mélanges étant située de préférence en dessous de 600 ppm, et les bandes de non-tissé revêtues sont soumises à une élongation longitudinale de 1:1,1 à 1:6, de préférence 1:1,1 à 1:2, à des températures de 60 à 0 degré en dessous de la température de cristallisation des revêtements par extrusion de polyoléfines, et ensuite à une élongation transversale de 1:1,1 à 1:6, de préférence de 1:1,1 à 1:2 à des températures de 80 à 1 degré, de préférence 60 à 2 degrés, en dessous de la température de fusion des revêtements par extrusion de polyoléfines, le trouble de blanchiment à la contrainte étant réalisé par l'élongation, en particulier l'élongation longitudinale.

2. Bandes de non-tissé revêtues par extrusion selon la revendication 1, **caractérisées en ce que** les homopolymères de propylène ou, selon le cas, copolymères de propylène contenus dans les revêtements par extrusion sont constitués :
1) d'homopolymères de propylène fabriqués en utilisant des catalyseurs de Ziegler-Natta ou des catalyseurs métallocènes et/ou de copolymères de propylène, éthylène et/ou des α-oléfines avec 4 à 18 atomes de carbone ayant une teneur en propylène de 75,0 à 99,9% en masse sous forme de copolymères statistiques, de copolymères à bloc et/ou de copolymères à blocs statistiques, avec des indices de fusion de 0,1 à 300 g/10 min à 230°C/2,16 kg, de préférence 1 à 150 g/10 min à 230°C/2,16 kg, et/ou
2) d'un mélange de polyoléfines d'un rapport M_{w}/Mₙ de 2 à 6 et d'un indice de fusion de 1 à 40 g/10 min à 230°C/2,16 kg, lequel est composé de
2.1) 60 à 98% en masse d'un copolymère cristallin de 85 à 99,5% en masse de propylène et de 15 à 0,5% en masse d'éthylène et/ou d'une α-oléfine de formule générale CH₂=CHR, dans laquelle R est un radical alkyle linéaire ou ramifié ayant 2 à 8 atomes de carbone, et
2.2) 2 à 40% en masse d'un copolymère élastique composé de 20 à 70% en masse d'éthylène et de 80 à 30% en masse de propylène et/ou d'une α-oléfine de formule générale CH₂=CHR, dans laquelle R est un radical alkyle linéaire ou ramifié ayant de 2 à 8 atomes de carbone, et/ou
3) de polypropylènes ou de copolymères de propylène largement amorphes avec une partie de polypropylène cristallin ou, selon le cas, de copolymère de propylène cristallin d'un pourcentage en masse inférieur à 10, d'une enthalpie de fusion inférieure à 40 J/g et d'un indice de fusion de 0,1 à 100 g/10 min à 230°C/2,16 kg, le polypropylène largement amorphe étant un homopolymère du propylène et/ou un copolymère du propylène constitué d'au moins 80% en mole de propylène et de tout au plus 20% en mole d'une ou de plusieurs α-oléfines de formule générale CH₂=CHR, dans laquelle R est un radical alkyle linéaire ou ramifié avec 2 à 8 atomes de carbone, et/ou
4) d'homopolymères de propylène non isostatiques d'un point de fusion de 145 à 165°C, d'une viscosité de fusion supérieure à 200 Pa·s (200 000 cps) à 190°C, d'une chaleur de cristallisation de 16,7-41,8 J/g (4 à 10 cal/g) et d'une proportion soluble dans le diéthyléther de 35% en masse à 55% en masse.

3. Bandes de non-tissé revêtues par extrusion selon l'une ou plusieurs des revendications 1 à 2, **caractérisées en ce que** les polymères de propylène modifiés contenus dans les revêtements par extrusion sont des homopolymères de propylène modifiés et/ou des copolymères de propylène modifiés qui sont fabriqués par traitement d'homopolymères de propylène et/ou de copolymères de propylène et d'éthylène ou, selon le cas, d'α-oléfines avec 4 à 18 atomes de carbone ainsi que des mélanges des polypropylènes mentionnés :
- avec des monomères éthyléniquement insaturés polyfonctionnels, et/ou
- des initiateurs de radicaux à décomposition par rayonnement ionisant ou, selon le cas, thermique.

4. Bandes de non-tissé revêtues par extrusion selon la revendication 3, **caractérisées en ce que** les polymères de propylène modifiés contenus dans les revêtements par extrusion sont des polypropylènes modifiés qui sont fabriqués par traitement d'homopolymères de propylène et/ou de copolymères à partir de propylène et d'éthylène ou, selon le cas, d'α-oléfines avec 4 à 18 atomes de carbone ainsi que de mélanges des polypropylènes mentionnés avec des monomères éthyléniquement insaturés polyfonctionnels et des initiateurs de radicaux à décomposition thermique selon un procédé en mode continu, dans lesquelle :
1) des particules de polypropylène sous forme de poudres, de granules ou de gravillons ayant une grosseur de grains préférée située dans l'intervalle entre 0,001 et 7 mm, qui sont composées :
1.1) d'homopolymères de propylène, en particulier d'homopolymères de propylène avec une distribution des masses molaires bimodales, des moyennes pondérales de masses molaires M_{w} de 500 000 à 1 500 000 g/mole, des moyennes numériques de masses molaires Mₙ de 25 000 à 100 000 g/mole et des valeurs M_{w}/Mₙ de 5 à 60, fabriqués dans une cascade de réacteurs en utilisant des catalyseurs de Ziegler-Natta ou des catalyseurs métallocènes, et/ou
1.2) de copolymères de propylène et d'éthylène ou, selon le cas, d'α-oléfines avec 4 à 18 atomes de carbone, de préférence de copolymères de propylène statistiques, de copolymères à bloc de propylène, de copolymères à blocs de propylène statistiques et/ou de polypropylènes élastomères ou de mélanges des polypropylènes modifiés mentionnés,
ont été mélangées dans un mélangeur continu avec 0,05 à 3% en masse, sur base des polypropylènes mis en oeuvre, des peroxydes acyle, des peroxydes alkyle, des hydroperoxydes, des peroxycarbonates et/ou des peresters comme initiateurs de radicaux à décomposition thermique dont la décomposition thermique cesse de préférence à moins de 210°C et qui sont dilués le cas échéant avec des solvants inertes, sous chauffage entre 30 et 100°C, de préférence entre 70 et 90°C,
2) des monomères bifonctionnels légèrement volatils, en particulier des diènes en C₄-C₁₀ et/ou des composés divinyle en C₇-C₁₀, sont absorbés par les particules de polypropylène venant de la phase gazeuse, de préférence dans des mélangeurs à circulation en continu comme absorbeurs de gaz-solide en mode continu, à une température T de 20°C à 120°C, de préférence de 60 à 100°C et d'une durée d'absorption moyenne de τₛ de 10 s à 1000 s, de préférence de 60 s à 600 s, la proportion, dans les particules de polypropylène, des monomères bifonctionnellement insaturés étant de 0,01 à 10% en masse, de préférence de 0,05 à 2% en masse, sur base des polypropylènes mis en oeuvre, ensuite
3) les particules de polypropylène, dans lesquelles les peroxydes acyle, les peroxydes alkyle, les hydroperoxydes, les peroxycarbonates et/ou les peresters comme initiateurs de radicaux à décomposition thermique et les monomères bifonctionnellement insaturés sont absorbés, sont mises en fusion dans des malaxeurs en mode continu ou extrudeuses, de préférence dans des extrudeuses à deux vis, dans une atmosphère composée de gaz inerte et de ces monomères bifonctionnels légèrement volatils entre 110°C et 210°C, et les initiateurs de radicaux à décomposition thermique sont en même temps décomposés,
4) la fusion est ensuite chauffée entre 220°C et 300°C, les monomères non transformés et les produits de décomposition sont éliminés, et
5) la fusion est mise en granules d'une manière connue en soi,
et dans lesquelles, avant l'étape de procédé 1) et/ou 5), et/ou avant ou, selon le cas, pendant l'étape de procédé 3) et/ou 4), on ajoute comme autres adjuvants, 0,01 à 2,5% en masse de stabilisants, 0,1 à 1% en masse d'antistatiques, 0,2 à 3% en masse de pigments, 0,05 à 1% en masse d'agents de nucléation et/ou 0,01 à 5% en masse d'adjuvants de traitement, sur base du polypropylène utilisé.

5. Bandes de non-tissé revêtues par extrusion selon l'une ou plusieurs des revendications 1 à 4, **caractérisées en ce qu'**on emploie comme charges des charges ayant une grosseur moyenne de particules de 0,5 à 2 µm.

6. Bandes de non-tissé revêtues par extrusion selon l'une ou plusieurs des revendications 1 à 5, **caractérisées en ce qu'**on emploie comme charges inorganiques des carbonates de calcium.

7. Bandes de non-tissé revêtues par extrusion selon l'une ou plusieurs des revendications 1 à 6, **caractérisées en ce que** la teneur résiduelle en humidité des mélanges de polyoléfines pour les revêtements par extrusion directement avant la préparation du revêtement se situe à moins de 300 ppm, de préférence à moins de 100 ppm.

8. Bandes de non-tissé revêtues par extrusion selon l'une ou plusieurs des revendications 1 à 7, **caractérisées en ce qu'**on utilise des bandes de non-tissé qui sont fabriquées selon la technologie du non-tissé spunbond.

9. Utilisation de bandes de non-tissé revêtues par extrusion selon l'une ou plusieurs des revendications 1 à 8 dans les secteurs de l'emballage, en particulier pour l'emballage ventilé d'aliments, d'agents de lavage et de médicaments; dans l'industrie textile ou vestimentaire, en particulier pour les vêtements de protection industrielle ventilés, les vêtements de sport et destinés à l'armée, des substances d'entreposage et des non-tissés de recouvrement à des fins décoratives; dans l'industrie hygiénique, en particulier pour les langes pour bébés ventilés, les change-culotte, les produits d'incontinence, les protège-slip et les serviettes hygiéniques; la médecine, en particulier pour les habits ventilés des salles d'opération, les vêtements de protection contre les infections, les articles de recouvrement de tables et pour la literie; la construction, en particulier pour les feutres ventilés de séparation et les bandes ventilées à étaler sous les toits; la construction des véhicules, des appareils et des machines, l'électrotechnique, l'électronique, l'emballage pour le transport, les appareils domestiques et les accessoires de bureau et de conférence.
